# EUROPEAN PATENT APPLICATION

(11) **EP 1 056 024 A1**
(43) Date of publication of application: **29.11.2000**
(21) Application number: 99109330.3
(22) Date of filing: 27.05.1999
(51) Int. Cl.: G06F 17/30

(54) **Text searching system**

(71) Applicant: Tornado Technologies Co., Ltd., Taipei (TW)
(72) Inventor: Chao, Kuo-Jen, c/o Tornado Technologies Co., Ltd., Taipei, Taiwan (TW)
(74) Representative: Bauer, Robert, Dipl.-Ing.

(57) **Abstract**

The invention relates to a text searching system (30,60) for searching web pages according to keyword and classification data (46,64) provided by a user. The text searching system (30,60) comprises a computer having a memory (32) for storing programs and data and a processor (34) for executing the programs stored in the memory (32), a text data file (36) stored in the memory (32) having text data (38) of web pages of a plurality of world wide web sites, a text index file (40) stored in the memory (32) having keyword searching data (42) for searching keywords contained in the text data (38) of each of the web pages of the text data file (36), a classification index file (44,62) stored in the memory (32) having classification data (46,64) corresponding to the classification (54) of each of the web pages of the text data file (36), and a searching program (48,66) stored in the computer for searching the text index file (40) and the classification index file (44,62) according to keyword and classification data (46,64) provided by a user so as to find text data (38) which are matched with the user provided keyword data and contained in a plurality of target web pages whose classifications (54) are matched with the user provided classification data (46,64) in the text data file (36).

## Description

The invention relates to a text searching system according to the pre-characterizing portion of claim 1.

As the number of web pages on the internet increases, a searching system becomes necessary for searching the myriad of web pages for specific information. A corresponding prior art searching system comprises a computer having a memory in which a text data file, a text index file comprising keyword searching data, and a searching program are stored. Since the system uses a keyword for searching web pages, the text data of all the web pages containing the keyword are returned. Whereas this requires an excessive amount of transmission time, most of the transmitted web pages do not fit well into the classification provided by the user. Therefore, additional search and transmission time must be spent. For example, if the user wants to search for web pages of movies containing references to "tornado", the searching system will transmit to the user the text data of all web pages containing the word "tornado". However, these transmitted web pages will include irrelevant pages concerning unrelated topics such as meteorology, history and news. Therefore, more time must be spent manually selecting the pages that are actually pertinent.

With these problems in mind, the present invention aims at providing a text searching system for searching web pages according to a keyword which, nevertheless, is more economic either for transmission time and consecutive manual selection.

This is achieved by the present invention as claimed in claim 1. The dependent claims define advantageous further developments of the respective invention.

In that, according to the invention, the system additionally includes a classification index file having classification data, and a searching program for searching text data matching with user provided keyword data and user provided classification data, the search can be performed in a much more defined manner, thus to avoid outputting of misrelated pages.

In the following the invention is described in more detail, having reference to the accompanying drawings, in which
Fig. 1 is a functional block diagram of a prior art searching system as mentioned above,
Fig. 2 is a perspective diagram of the keyword searching data in the system of Fig. 1,
Fig. 3 is a functional block diagram of a text searching system according to the present invention, and
Fig. 4 is a perspective diagram of another text searching system according to the present invention.

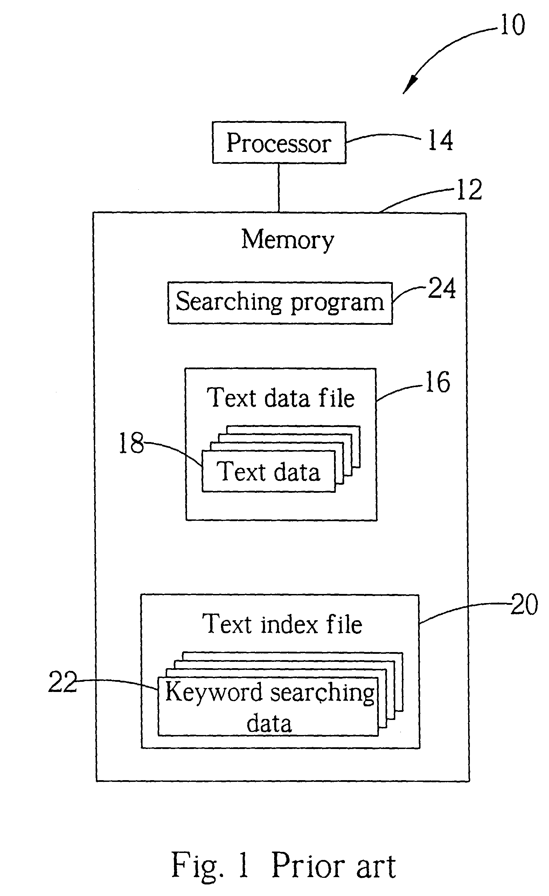

The prior art text searching system 10 shown in Fig.1 comprises a computer (not shown), a text data file 16, a text index file 20, and a searching program 24. The computer comprises a memory 12 for storing programs and data and a processor 14 for executing the programs stored in the memory 12. The text data file 16, text index file 20, and searching program 24 are stored in the memory 12. The text data file 16 has text data 18 of web pages of a plurality of world wide web sites. The text index file 20 has keyword searching data 22 for searching keywords contained in the text data 18 of each of the web pages of the text data file 16. The searching program 24 is used for searching the text index file 20 according to keyword data provided by a user so as to find text data 18 of all the web pages having the user provided keyword data in the text data file 16.

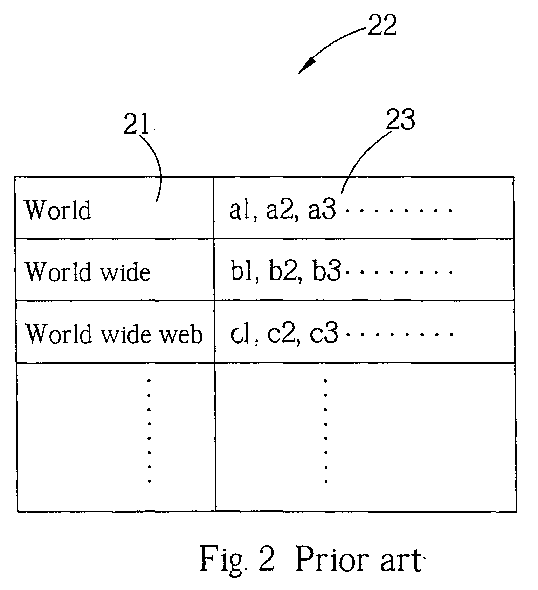

As can be seen in Fig. 2, the keyword searching data 22 of the text index file 20 are built according to the text data 18 of the text data file 16. Each set of keyword searching data 22 has a keyword 21 and address data 23 of the keyword 21 in all web pages. As shown in Fig. 2, the address data of the keyword "world" in all web pages are a1, a2, a3...; the address data of the keyword "world wide web" in all web pages are c1, c2, c3.... When the user inputs a keyword, the searching program 24 searches the text index file 20 according to the keyword provided by the user to find the keyword searching data 22 corresponding to the keyword for getting the address data of the keyword in all web pages. Finally, the text data file 16 is used for transmitting to the user the text data 18 of all web pages having the keyword.

As mentioned before, because the prior art searching system 10 uses a keyword for searching web pages, the text data of all web pages containing the keyword are returned. This takes an excessive amount of time to transmit. In searching for the web pages within a specific classification, the searching system 10 transmits the text data of all the web pages containing the keyword to the user but most of the transmitted web pages are not well matched with the user provided classification. Therefore, more search and transmission time must be spent and, nevertheless, finally the pages actually pertinent have to be selected manually.

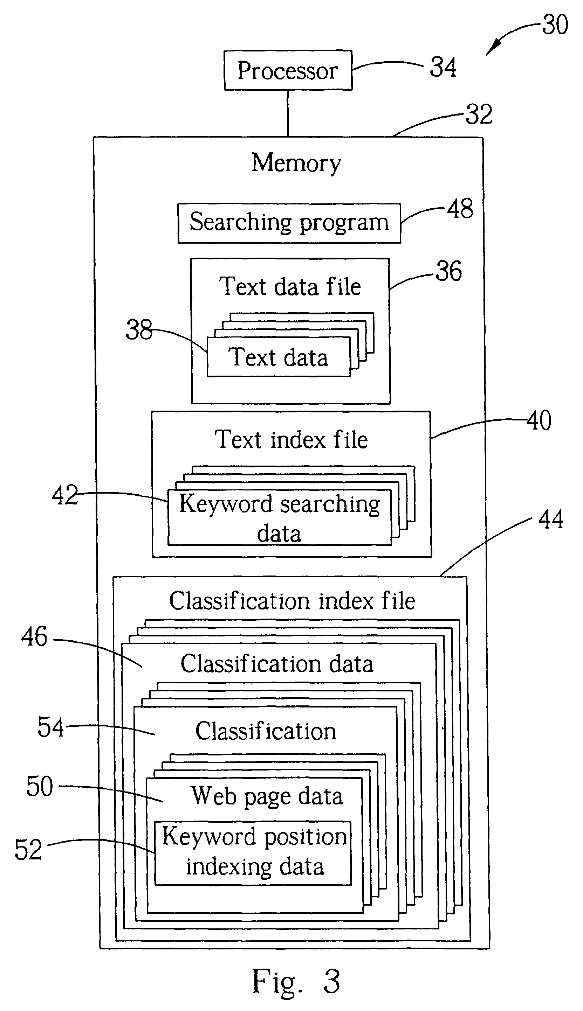

A text searching system 30 according to the present invention, as this is shown in Fig. 3, comprises a computer (not shown), a text data file 36, a text index file 40, a classification index file 44, and a searching program 48. The computer comprises a memory 32 for storing programs and data and a processor 34 for executing the programs stored in the memory 32. The text data file 36, text index file 40, classification index file 44 and searching program 48 are stored in the memory 32. The text data file 36 has text data 38 of web pages of a plurality of world wide web sites. The text index file 40 has keyword searching data 42 for searching keywords contained in the text data 38 of each of the web pages of the text data file 36. The classification index file 44 has classification data 46 corresponding to the classification of each of the web pages of the text data file 36. The searching program 48 is used for searching the text index file 40 and the classification index file 44 according to keyword and classification data provided by a user so as to find text data 38 which are matched with the user provided keyword data and contained in a plurality of target web pages whose classifications are matched with the user provided classification data in the text data file 36.

The keyword searching data 42 of the text index file 40 is built according to the text data 38 of the text data file 36. Each keyword searching data 42 has a keyword and address data of the keyword in all web pages. Each classification data 46 of the classification index file 44 has a plurality of classifications 54, and each classification 54 has web page data 50 of all the web pages belonging to the classification. Each web page data 50 comprises a keyword position indexing data 52 of the web page. The keyword position indexing data 52 is used for pointing to the positions of the keyword searching data 42 of the specific web page contained in the text index file 40.

When a user inputs keyword and classification data, the searching program 48 searches the classification index file 44 according to the classification data provided to find the web page data 50 of all web pages belonging to the classification data. Then, the searching program 48 searches the position of the keyword searching data 42 of the text data 38 of each web page in the text index file 40 according to the keyword position indexing data 52 of the web page data 50. Then, the searching program 48 searches the keyword searching data 42 of all web pages belonging to the classification data in the text index file 40 according to the keyword provided by the user to find the text data 38 of all web pages which belong to the classification data and have the keyword. Finally, the text data file 36 is used for transmitting the text data 38 of all web pages belonging to the classification data and having the keyword to the user.

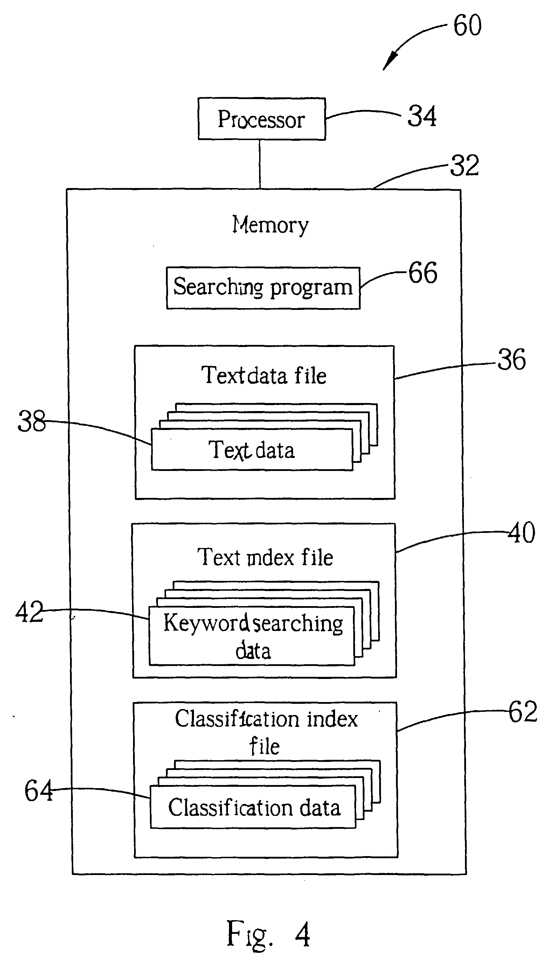

Fig.4 is a perspective diagram of another text searching system 60 according to the present invention. The classification index file 62 of the text searching system 60 contains the classification data 64 of the web pages of each keyword searching data 42 in the text index file 40. When a user inputs keyword and classification data, the searching program 66 searches the text index file 40 according to the keyword provided to find all the keyword searching data 42 matched with the user provided keyword data and the address data of the keyword in all the web pages. Then, the searching program 66 searches the classification index file 62 according to the keyword searching data 42 to find the classification data 64 of the web page of each matched keyword searching data 42. The searching program 66 finds all keyword searching data 42 belonging to the classification data according to the classification data provided by the user to find the text data 38 of all web pages which belong to the classification data and have the keyword. Finally, the text data file 36 is used for transmitting the text data 38 of all web pages belonging to the classification data and having the keyword to the user.

The text searching system 30 uses the classification index file 44 to find all web pages belonging to the classification data provided by the user, and then uses the text index file 40 and the keyword provided by the user to find all the web pages belonging to the classification data and having the keyword. The text searching system 60 uses the text index file 40 to find all web pages having the keyword provided by the user, and then uses the classification index file 62 and the classification data provided by the user to find all the web pages belonging to the classification data and having the keyword.

Compared with the prior art searching system 10, the text searching systems 30, 60 according to the present invention use keyword and classification data provided by the user and finds all the web pages that belong to the classification data and have the keyword. The text searching systems 30, 60 transmit only the text data of all the web pages belonging to the classification data and having the keyword to the user. Therefore, the searching and transmission time is greatly reduced and the text searching system is more efficient.

## Claims

1. A text searching system (30, 60) comprising:
a computer having a memory (32) for storing programs and data and a processor (34) for executing the programs stored in the memory (32);
a text data file (36) stored in the memory (32) having text data (38) of web pages of a plurality of world wide web sites; and
a text index file (40) stored in the memory (32) having keyword searching data (42) for searching keywords contained in the text data (38) of each of the web pages of the text data file (36);
**characterized in that:**
the text searching system (30,60) further comprises:
a classification index file (44,62) stored in the memory (32) having classification data (46,64) corresponding to the classification (54) of each of the web pages of the text data file (36); and
a searching program (48,66) stored in the computer for searching the text index file (40) and the classification index file (44,62) according to keyword and classification data (46,64) provided by a user so as to find text data (38) which are matched with the user provided keyword data and contained in a plurality of target web pages whose classifications (54) are matched with the user provided classification data (46,64) in the text data file (36).

2. The text searching system (30) of claim 1 wherein the classification index file (44) contains a plurality of classifications (54) and web page data (50) of all the web pages belonging to each of the classifications (54), and wherein the searching program (48) searches the classification index file (44) to find all the target web pages whose classifications (54) are matched the user provided classification data (46), and then searches the text index file (40) to find text data (38) which are matched with the user provided keyword data and contained in the target web pages of the text data file (36).

3. The text searching system (30) of claim 2 wherein the web page data (50) of each specific web page in the classification index file (44) contain keyword position indexing data (52) for pointing the positions of the keyword searching data (42) of the specific web page contained in the text index file (40), and wherein the searching program (48) searches the classification index file (44) to find the positions of the keyword searching data (42) of the target web pages in the text index file (40), and then searches the keyword searching data (42) of the target web pages to find the text data (38) which are matched with the user provided keyword data and contained in the target web pages of the text data file (36).

4. The text searching system (60) of claim 1 wherein the classification index file (62) contains the classification of the web page of each keyword searching data (42) in the text index file (40), and wherein the searching program (66) searches the text index file (40) to find all the keyword searching data (42) matched with the user provided keyword data, and then searches the classification index file (62) to find the classification of the web page of each matched keyword searching data (42) so as to locate the keyword searching data (42) of the target web pages, and finally finds the text data (38) contained in the text data file (36) using the keyword searching data (42) of the target web pages.
